# EUROPEAN PATENT APPLICATION

(11) **EP 4 410 614 A1**
(43) Date of publication of application: **07.08.2024**
(21) Application number: 22876831.3
(22) Date of filing: 28.09.2022
(51) Int. Cl.: B60T 13/14, B60T 13/68, B60T 13/74, B60T 8/17, B60R 16/02, B01D 46/42

(54) **ELECTRONIC BRAKE SYSTEM HYDRAULIC BLOCK AND HYDRAULIC ASSEMBLY**

(30) Priority: 28.09.2021 KR 20210128072
(71) Applicant: HL Mando Corporation, Pyeongtaek-si, Gyeonggi-do 17962 (KR)
(72) Inventor: SONG, Mingeun, Daejeon 35404 (KR)
(74) Representative: Pfenning, Meinig & Partner mbB
(86) International application number: PCT/KR2022/014527
(87) International publication number: WO 2023/055059

(57) **Abstract**

A hydraulic block for an electronic brake system of the present invention is disclosed. According to one aspect of the present invention, a hydraulic block for an electronic brake system, which includes a plurality of valves and flow paths for adjusting braking hydraulic pressure supplied to a plurality of wheel cylinders, the hydraulic block including a pump accommodation bore which is provided in a front surface of the hydraulic block and accommodates a pump which supplies hydraulic pressure, a master cylinder accommodation bore which is provided in a first side surface of the hydraulic block and accommodates a master cylinder therein, a plurality of wheel cylinder connection ports which are provided in the front surface of the hydraulic block and communicate with the plurality of wheel cylinders, and a reservoir connection port which is provided in a second side surface of the hydraulic block and communicates with a reservoir which stores a pressurized medium, wherein, among the plurality of wheel cylinder connection ports, one or more of the wheel cylinder connection ports are vertically arranged at a left or right side of the pump accommodation bore, and the remaining wheel cylinder connection ports are arranged in a left-right direction on or under the pump accommodation bore may be provided.

## Description

### [Technical Field]

The present invention relates to a hydraulic block and hydraulic assembly for an electronic brake system, and more specifically, to a hydraulic block and hydraulic assembly for an electronic brake system in order for electronically controlling braking pressure in a hydraulic brake system.

### [Background Art]

An electronic brake system is intended to efficiently prevent a slip phenomenon which may occur during the braking, sudden acceleration, or rapid acceleration of a vehicle and generally includes not only a boosting device, a master cylinder, and a wheel cylinder of a vehicle brake system, but also a hydraulic block for adjusting braking hydraulic pressure and an electronic control unit for controlling the hydraulic block.

In a rectangular parallelepiped hydraulic block made of aluminum, a plurality of solenoid valves (normally open (NO)/normally closed (NC) valves) which control the braking pressure to be transmitted to a wheel cylinder provided in each vehicle wheel, a check valve which allows only one-way flow of a pressurized medium, a pump driven by a motor, and the like are installed.

In such a hydraulic block, a plurality of valve accommodation bores, pump accommodation bores, and motor accommodation bores, connection ports for connection to a master cylinder and a wheel cylinder, and the like are processed for compactly installing a plurality of components. In addition, a plurality of flow paths which are connected to the connection ports and the accommodation bores to guide a transmission direction of hydraulic pressure are processed in the hydraulic block.

In addition, a reservoir, a motor, a master cylinder, an electronic control unit, a wheel cylinder, and the like are mounted on the hydraulic block to constitute a hydraulic assembly. In the hydraulic assembly, as various components are mounted on the hydraulic block, a size thereof increases, and thus an internal structure should be compactly formed to reduce a weight of the hydraulic block and minimize a size thereof.

### [Technical Problem]

The present invention is directed to providing a hydraulic block for an electronic brake system with a size optimized by utilizing an unused space of the hydraulic block.

The present invention is directed to providing a hydraulic block for an electronic brake system in which the functional degradation and failure of a motor are prevented by reducing the internal pressure of the motor.

The present invention is directed to providing a hydraulic block for an electronic brake system with improved packaging and assemblability through a compact layout.

### [Technical Solution]

One aspect of the present invention provides a hydraulic block for an electronic brake system, which includes a plurality of valves and flow paths for adjusting braking hydraulic pressure supplied to a plurality of wheel cylinders, the hydraulic block including a pump accommodation bore which is provided in a front surface of the hydraulic block and accommodates a pump which supplies hydraulic pressure, a master cylinder accommodation bore which is provided in a first side surface of the hydraulic block and accommodates a master cylinder therein, a plurality of wheel cylinder connection ports which are provided in the front surface of the hydraulic block and communicate with the plurality of wheel cylinders, and a reservoir connection port which is provided in a second side surface of the hydraulic block and communicates with a reservoir which stores a pressurized medium, wherein, among the plurality of wheel cylinder connection ports, one or more of the wheel cylinder connection ports are vertically arranged at a left or right side of the pump accommodation bore, and the remaining wheel cylinder connection ports are arranged in a left-right direction on or under the pump accommodation bore.

The hydraulic block for an electronic brake system may further include a plurality of reservoir fastening grooves provided in the second side surface and an upper surface of the hydraulic block in order for mounting the reservoir.

The reservoir connection port may be disposed at an upper side of the second side surface of the hydraulic block.

The pump accommodation bore may be provided at a lower side of the front surface of the hydraulic block, and the master cylinder accommodation bore may be provided at an upper side of the first side surface of the hydraulic block.

Among the plurality of wheel cylinder connection ports, one or more wheel cylinder connection ports may be disposed in the left-right direction above the master cylinder accommodation bore, and the remaining wheel cylinder connection ports may be vertically arranged at the left or right side of the pump accommodation bore.

The reservoir connection port may be provided as a plurality of reservoir connection ports, some of the plurality of reservoir connection ports may be disposed above the master cylinder accommodation bore, and the remainder may be disposed under the master cylinder accommodation bore.

The pump accommodation bore may be provided at an upper side of the front surface of the hydraulic block, and the master cylinder accommodation bore may be provided at a lower side of the first side surface of the hydraulic block.

Among the plurality of wheel cylinder connection ports, one or more wheel cylinder connection ports may be arranged in the left-right direction under the master cylinder accommodation bore, and the remaining wheel cylinder connection ports may be vertically arranged at the left or right side of the pump accommodation bore.

Another aspect of the present invention provides a hydraulic block for an electronic brake system, which includes a plurality of valves and flow paths for adjusting braking hydraulic pressure supplied to a plurality of wheel cylinders, the hydraulic block including a pump accommodation bore which is provided in a front surface of the hydraulic block and accommodates a pump which supplies hydraulic pressure, a motor which is mounted on the front surface of the hydraulic block and includes a driving unit, which provides power to the pump, and a cover part which covers the driving unit, and a ventilation unit including a ventilation path which is formed to pass through the hydraulic block and is provided separately from the pump accommodation bore and of which one side communicates with an inner portion of the cover part and the other side communicates with a side surface of the hydraulic block.

The ventilation unit may include an outer ventilation hole formed to expand at an end portion of the ventilation path and a filter inserted into the outer ventilation hole.

The ventilation unit may further include a stopper, which is press-fitted into the outer ventilation hole to fix the filter to the outer ventilation hole and includes at least one hole which communicates with the filter.

The ventilation path may include a first ventilation path which is provided in one surface of the hydraulic block and of which one side communicates with an inner portion of the motor and a second ventilation path which is formed perpendicular to the first ventilation path and of which one side communicates with the first ventilation path and the other side communicates with a side surface of the hydraulic block.

Still another aspect of the present invention provides a hydraulic assembly for an electronic brake system, the hydraulic assembly including a hydraulic block in which a plurality of valves, a flow path, and a pump are installed to control braking hydraulic pressure to be supplied to a plurality of wheel cylinders, a motor which is mounted on a front surface of the hydraulic block and provides power to the pump, a master cylinder which is mounted on a first side surface of the hydraulic block and generates hydraulic pressure, a reservoir which is mounted on a second side surface and an upper surface of the hydraulic block and stores a pressurized medium, and an electronic control unit which is mounted on a rear surface of the hydraulic block and controls the plurality of valves and the motor and in which a connector is formed.

The master cylinder may be disposed at an upper side of the first side surface of the hydraulic block, and the motor may be disposed at a lower side of the front surface of the hydraulic block.

The electronic control unit may be mounted so that the connector faces upward.

The master cylinder may be disposed at an upper side of the first side surface of the hydraulic block, and the motor may be disposed at a lower side of the front surface of the hydraulic block.

The electronic control unit may be mounted so that the connector faces downward.

### [Advantageous Effects]

A hydraulic block for an electronic brake system according to one embodiment of the present invention has an effect of optimizing a size by utilizing an unused space of the hydraulic block.

A hydraulic block for an electronic brake system according to one embodiment of the present invention has an effect of preventing the functional degradation and failure of a motor by reducing the internal pressure of the motor.

A hydraulic block for an electronic brake system according to one embodiment of the present invention has an effect of improving packaging and assemblability through a compact layout.

### [Description of Drawings]

Although the present invention will be specifically described with reference to the accompanying drawings, since the drawings show exemplary embodiments of the present invention, the technical spirit to the present invention should not be interpreted as limited to the drawings.
FIG. 1 is a schematic perspective view illustrating a hydraulic block for an electronic brake system according to a first embodiment of the present invention.
FIG. 2 is a perspective view illustrating the hydraulic block for an electronic brake system according to the first embodiment of the present invention seen in a different direction.
FIG. 3 is a side view illustrating a second side surface of the hydraulic block for an electronic brake system according to the first embodiment of the present invention.
FIG. 4 is a cross-sectional view illustrating a cross section A' of FIG. 1.
FIG. 5 is an enlarged cutaway perspective view illustrating a ventilation unit of the hydraulic block for an electronic brake system according to the first embodiment of the present invention.
FIG. 6 is a perspective view illustrating a hydraulic assembly for an electronic brake system according to the first embodiment of the present invention.
FIG. 7 is a front view illustrating the hydraulic assembly for an electronic brake system according to the first embodiment of the present invention.
FIG. 8 is a schematic perspective view illustrating a hydraulic block for an electronic brake system according to a second embodiment of the present invention.
FIG. 9 is a perspective view illustrating a hydraulic assembly for an electronic brake system according to the second embodiment of the present invention.
FIG. 10 is a front view illustrating the hydraulic assembly for an electronic brake system according to the second embodiment of the present invention.

### [Modes of the Invention]

Hereinafter, embodiments of the present disclosure will be described in detail with reference to the accompanying drawings. The following embodiments are provided to sufficiently convey the spirit of the present invention to those skilled in the art. The present invention is not limited to the embodiments disclosed herein and may be implemented in different forms. In the drawings, portions which are not related to the description may be omitted to clarify the present invention, and sizes of components may be exaggerated to facilitate understanding of the present invention.

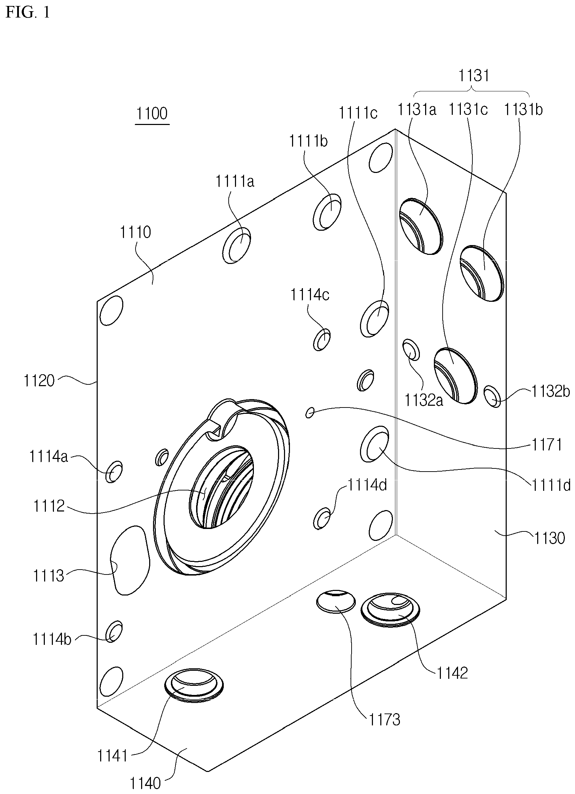

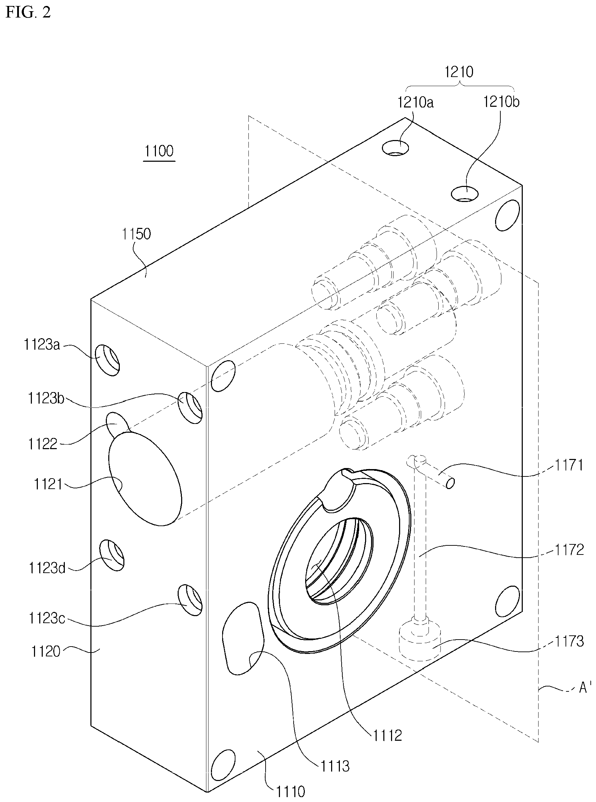

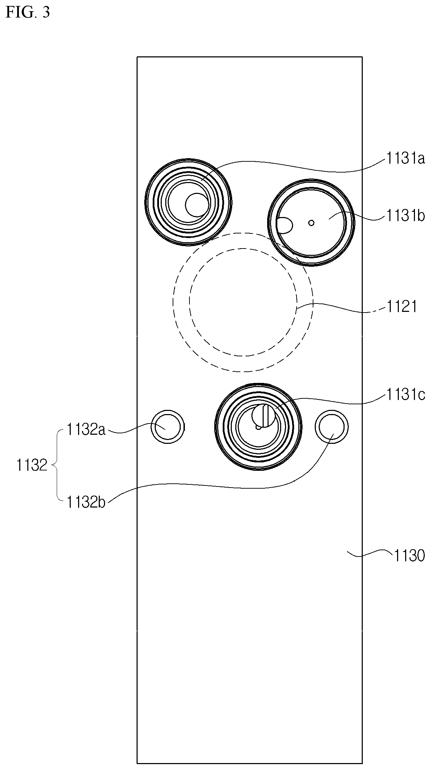

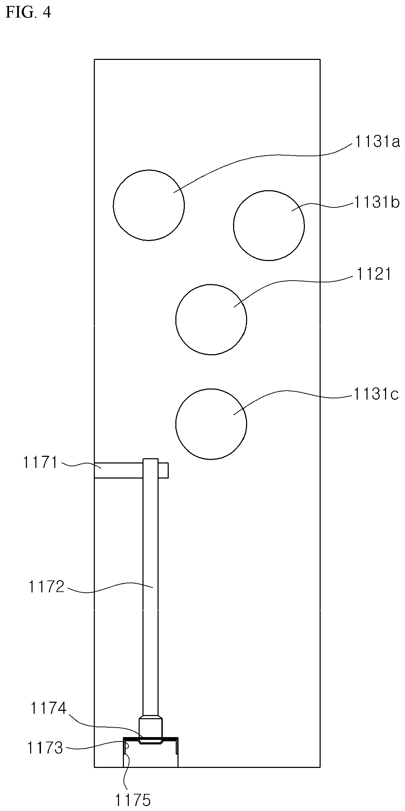

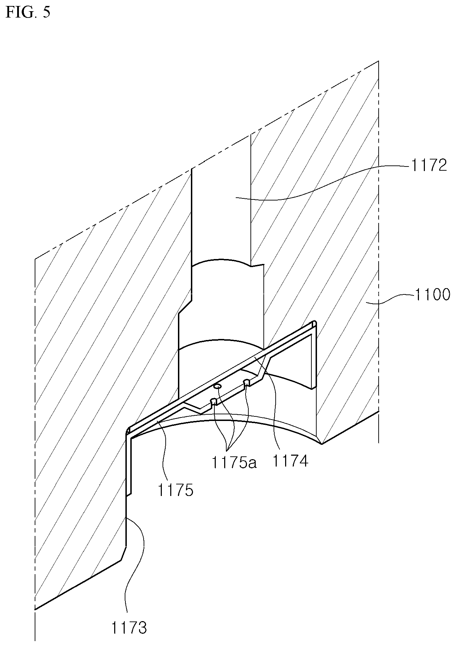

FIG. 1 is a schematic perspective view illustrating a hydraulic block for an electronic brake system according to a first embodiment of the present invention, and FIG. 2 is a perspective view illustrating the hydraulic block for an electronic brake system according to the first embodiment of the present invention shown in a different direction. FIG. 3 is a side view illustrating a second side surface of the hydraulic block for an electronic brake system according to the first embodiment of the present invention, and FIG. 4 is a cross-sectional view illustrating a cross section A' of FIG. 1. FIG. 5 is an enlarged cutaway perspective view illustrating a ventilation unit of the hydraulic block for an electronic brake system according to the first embodiment of the present invention.

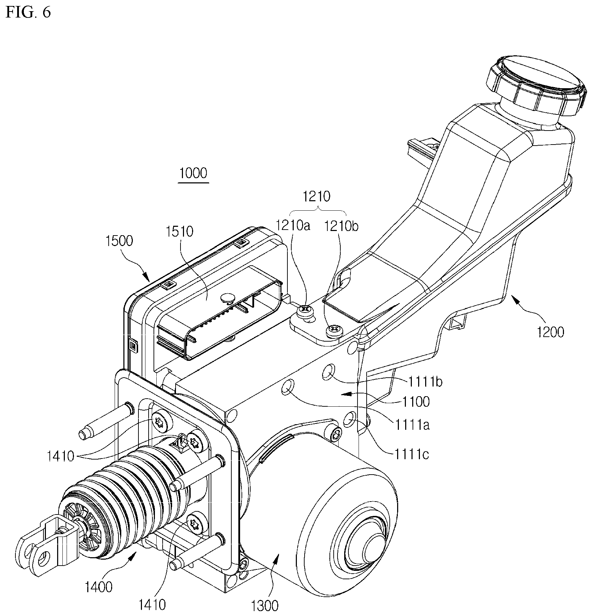

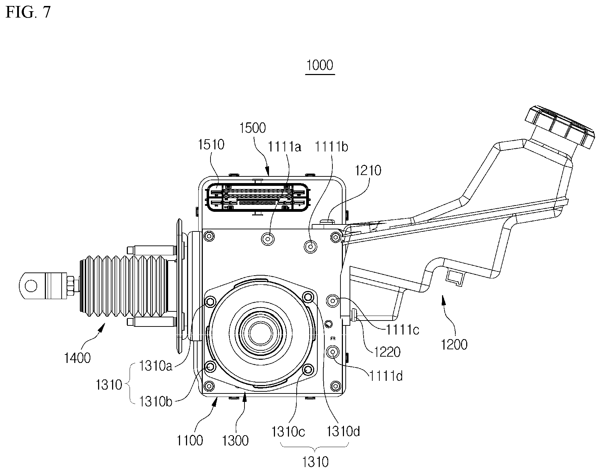

Referring to FIGS. 1 to 5, a hydraulic block 1100 for an electronic brake system according to the first embodiment of the present invention includes a plurality of bores and connection ports and is provided as a cubic block in which flow paths which connect the plurality of bores and connection ports are formed. In addition, as illustrated in FIGS. 6 and 7, a pump (not shown), a motor 1300, a reservoir 1200, a master cylinder 1400, and an electronic control unit 1500 may be mounted on the hydraulic block 1100 to constitute a hydraulic assembly 1000 so as to implement an electronic brake system for implementing braking by supplying a pressurized medium to a plurality of wheel cylinders (not shown).

The hydraulic block 1100 has a cubic body made of a metal such as aluminum. Although not illustrated in the drawings, accommodation bores for accommodating a plurality of valves, sensors, and the like may be provided in surfaces of the hydraulic block 1100.

In this case, in order to facilitate understanding of the present invention, a front surface 1110, a rear surface 1160, an upper surface 1150, a lower surface 1140, and first and second side surfaces 1120 and 1130 which indicate the directions of the hydraulic block 1100 are set on the basis of the hydraulic assembly 1000 illustrated in FIG. 1, but the present invention is not limited thereto, and it should be understood that surfaces indicating the directions of the hydraulic block 1100 may be changed depending on the location where the hydraulic block 1100 is installed.

A pump accommodation bore 1112 for accommodating a pump which provides hydraulic pressure, a plurality of wheel cylinder connection ports 1111 connected to the plurality of wheel cylinders, and a ventilation unit 1170 communicating with an inner portion of the motor 1300 to reduce pressure are formed in the front surface 1110 of the hydraulic block 1100. In this case, the front surface 1110 of the hydraulic block 1100 may be a wide surface of the cubic hydraulic block 1100.

The pump which provides the pressure of the pressurized medium is installed in the pump accommodation bore 1112. In this case, the pump (not shown) may include a power conversion unit (not shown) which converts the rotational motion of the motor 1300 into linear motion, a hydraulic piston (not shown) which is connected to the power conversion unit, moves forward and backward, and generates hydraulic pressure, and the like.

The pump accommodation bore 1112 may be disposed in the front surface 1110 of the hydraulic block 1100 to be biased toward one side. For example, the pump accommodation bore 1112 may be disposed in a left lower corner of the front surface 1110 of the hydraulic block 1100 to be closer to the first side surface 1120 and the lower surface 1140.

The wheel cylinder connection ports 1111 may be provided as a plurality of holes for communicating with the wheel cylinders (not shown), disposed in the front surface 1110 of the hydraulic block 1100 to be spaced apart from each other, and provided as two pairs.

Among the plurality of wheel cylinder connection ports 1111, at least some wheel cylinder connection ports 1111a and 1111b may be horizontally arranged above the pump accommodation bore 1112, and the other wheel cylinder connection ports 1111c and 1111d may be vertically arranged beside the pump accommodation bore 1112. For example, when the pump accommodation bore 1112 is provided in the left lower corner of the front surface 1110 of the hydraulic block 1100, one pair of wheel cylinder connection ports 1111c and 1111d of the plurality of wheel cylinder connection ports may be vertically arranged to the right of the pump accommodation bore 1112, and the other pair of wheel cylinder connection ports 1111a and 1111b of the plurality of wheel cylinder connection ports may be horizontally arranged above the pump accommodation bore 1112.

At least some of the plurality of wheel cylinder connection ports 1111 may be horizontally disposed above a master cylinder accommodation bore 1121 in the front surface 1110 of the hydraulic block 1100, and the remainder may be vertically arranged beside the pump accommodation bore 1112.

As illustrated in FIGS. 6 and 7, the motor 1300 connected to the pump (not shown) may be mounted on the front surface 1110 of the hydraulic block 1100 by a plurality of fixing bolts 1310. Accordingly, a plurality of through holes 1114 to which the fixing bolts 1310 for fixing the motor 1300 are fastened may be provided around the pump accommodation bore 1112.

In addition, a motor connector accommodation bore 1113 for accommodating a motor connector (not shown) at one side of the accommodation bore 1112 may be provided in the front surface 1110 of the pump hydraulic block 1100.

The ventilation unit 1170 for reducing the internal pressure of the motor 1300 when the motor 1300 is mounted is provided in the front surface 1110 of the hydraulic block 1100, and the ventilation unit 1170 is formed to pass through the hydraulic block 1100 and provided to be separated from the pump accommodation bore 1112.

The ventilation unit 1170 may allow the inner portion of the motor 1300 installed on one side of the hydraulic block 1100 to communicate with the other side of the hydraulic block 1100 so as to prevent an increase in internal pressure of the motor 1300 due to heat generation in a driving unit. In addition, the ventilation unit 1170 may include a filter 1174 which allows the flow of air to but prevents the flow of liquid to prevent a failure of the motor 1300.

The ventilation unit 1170 may include ventilation paths 1171 and 1172 each having one side communicating with the inner portion of the motor 1300 and the other side communicating with the outside of the hydraulic block 1100, an outer ventilation hole 1173 formed to expand at the end portions of the ventilation paths 1171 and 1172, the filter 1174 inserted into the outer ventilation hole 1173, and a stopper 1175 which fixes the filter 1174.

The ventilation paths 1171 and 1172 include a first ventilation path 1171 which is provided in the front surface 1110 of the hydraulic block 1100 and communicates with an inner side of a cover part of the motor and a second ventilation path 1172 which is formed perpendicular to the first ventilation path 1171 and of which one side communicates with the first ventilation path 1171 and the other side communicates with the outside of the hydraulic block 1100. In this case, the other side of the second ventilation path 1172 may be connected to the outer ventilation hole 1173, and the outer ventilation hole may be formed in the lower surface 1140 of the hydraulic block 1100.

However, a position of the outer ventilation hole 1173 is not limited thereto, and the outer ventilation hole 1173 may be formed in any surface of the hydraulic block 1100 and should be equally understood as long as the outer ventilation hole 1173 communicates with the motor 1300 of the hydraulic block 1100 and reduces the internal pressure of the motor 1300.

The outer ventilation hole 1173 may be provided as a cylindrical groove formed to expand at the end portions of the ventilation paths 1171 and 1172, the filter 1174 may be installed in the outer ventilation hole 1173, and the stopper 1175 may be mounted in the outer ventilation hole 1173.

The filter 1174 is provided in a shape corresponding to the outer ventilation hole 1173 and installed in the outer ventilation hole 1173. The filter 1174 may be provided as a filter which allows the flow of air to but prevents the flow of liquid, and for example, the filter 1174 may be provided as a Gore-Tex filter or membrane filter.

The stopper 1175 may be provided in the form of a pipe cap, which has at least one hole formed in a central portion and communicates with the filter, and is press-fitted into the outer ventilation hole 1173 or tightly fixed to an inner circumferential surface of the outer ventilation hole 1173. The stopper 1175 may be press-fitted into the outer ventilation hole 1173 to fix the filter 1174 in a state in which the filter 1174 is installed or seated in the outer ventilation hole 1173.

The master cylinder accommodation bore 1121 for accommodating the master cylinder 1400 and a pedal sensor accommodation bore 1122 for accommodating a pedal displacement sensor (not shown) are formed in the first side surface 1120 of the hydraulic block 1100.

The master cylinder 1400 for transferring the pressurized medium according to a braking intention of a driver is installed in the master cylinder accommodation bore 1121.

The master cylinder accommodation bore 1121 may be arranged in a direction from the first side surface 1120 toward the second side surface 1130 and disposed perpendicular to the pump accommodation bore 1112.

The master cylinder accommodation bore 1121 may be disposed in the first side surface 1120 of the hydraulic block 1100 to be biased toward one side and not overlap the pump accommodation bore 1112. For example, when the pump accommodation bore 1112 is disposed at a lower side, the master cylinder accommodation bore 1121 may be disposed at an upper side of the first side surface 1120 to be closer to the upper surface 1150. In this case, as described above, the master cylinder accommodation bore 1121 may be disposed at a certain distance from the upper surface 1150 of the hydraulic block 1100 so that at least one wheel cylinder connection port 1111 may be provided above the master cylinder accommodation bore 1121.

The pedal sensor accommodation bore 1122 for accommodating the pedal displacement sensor is formed at one side of the master cylinder accommodation bore 1121. In this case, the pedal sensor accommodation bore 1122 may be provided to overlap a portion of the master cylinder accommodation bore 1121.

In the first side surface 1120 of the hydraulic block 1100, a plurality of through holes 1123 to which fixing bolts 1410 for fixing the master cylinder 1400 are fastened may be provided around the master cylinder accommodation bore 1121.

Reservoir connection ports 1131 communicating with the reservoir 1200 for storing the pressurized medium are provided in the second side surface 1130 of the hydraulic block 1100. In this case, the reservoir connection ports 1131 may be disposed at an upper side of the second side surface 1130.

The reservoir connection ports 1131 may be provided as a plurality of holes for communicating with the reservoir 1200 and disposed separately from each other. For example, the reservoir connection ports 1131 may include first and second reservoir connection ports 1131a and 1131b connected to the master cylinder 1400 through separate flow paths and a third reservoir connection port 1131c connected to the pump through a separate flow path. In this case, some reservoir connection ports 1131a and 1131b may be disposed above the master cylinder accommodation bore 1121, and the remaining reservoir connection port 1131c may be disposed under the master cylinder accommodation bore 1121.

One or more reservoir fastening grooves 1132 to which fixing bolts 1210 for mounting the reservoir 1200 are fastened may be provided in the second side surface 1130 of the hydraulic block 1100. In this case, the reservoir fastening grooves 1132 may also be provided in the upper surface 1150 of the hydraulic block 1100, thereby firmly mounting the reservoir 1200.

Although not illustrated in the drawings, accommodation bores in which a plurality of valves, such as a normally open (NO) valve, a normally closed (NC) valve, etc., are provided may be provided in the rear surface 1160 of the hydraulic block 1100.

In the hydraulic block 1100 for an electronic brake system according to the present invention, the size of the hydraulic block 1100 can be minimized by effectively utilizing the space of the hydraulic block 1100 using a layout of the master cylinder accommodation bore 1121, the pump accommodation bore 1112, the wheel cylinder connection ports 1111, and the reservoir connection ports.

Hereinafter, a hydraulic assembly 1000 including the hydraulic block 1100 for an electronic brake system according to the first embodiment of the present invention will be described.

FIG. 6 is a perspective view illustrating the hydraulic assembly 1000 for an electronic brake system according to the first embodiment of the present invention, and FIG. 7 is a front view illustrating the hydraulic assembly 1000 for an electronic brake system as seen in a direction toward the front surface 1110 according to the first embodiment of the present invention.

Referring to FIGS. 6 and 7, the hydraulic assembly 1000 for an electronic brake system according to the first embodiment of the present invention includes the cubic hydraulic block 1100 and includes the motor 1300, the reservoir 1200, the master cylinder 1400, and the electronic control unit 1500 which are mounted on the hydraulic block 1100.

The motor 1300 may be mounted in the front surface 1110 of the hydraulic block 1100 at a position corresponding to the pump accommodation bore 1112 and, for example, may be disposed in the front surface 1110 of the hydraulic block 1100 to be biased downward. In this case, the motor 1300 may pass through the front surface 1110 of the hydraulic block 1100 and be coupled thereto by the plurality of fixing bolts 1310.

The motor 1300 is provided to provide power so that the pump (not shown) may generate hydraulic pressure and controlled by receiving an electrical signal from the electronic control unit 1500 through the motor connector (not shown).

The motor 1300 includes a driving unit, which includes a stator and a rotor and provides power to the pump (not shown), and a cover part which covers an outer side of the driving unit. In this case, when the motor 1300 is driven, heat is generated by the driving unit to increase the internal pressure of the cover part, and the internal pressure of the motor 1300 may be reduced through the ventilation unit 1170.

The reservoir 1200 may be mounted on the second side surface 1130 of the hydraulic block 1100 at a position corresponding to the reservoir connection port and, for example, may be disposed on the second side surface 1130 of the hydraulic block 1100 to be biased upward.

The reservoir 1200 may be mounted on the hydraulic block 1100 by being fastened to the plurality of reservoir fastening grooves 1132 provided in the upper surface 1150 and the second side surface 1130 of the hydraulic block 1100 by fixing bolts 1210 and 1220.

The master cylinder 1400 may be mounted on the first side surface 1120 of the hydraulic block 1100 at a position corresponding to the master cylinder accommodation bore 1121 and, for example, may be disposed on the first side surface 1120 of the hydraulic block 1100 to be biased upward.

The master cylinder 1400 is a device for transferring the pressurized medium according to a braking intention of the driver and includes an input rod connected to a brake pedal and a master piston connected to the input rod and provided to move forward and backward in a master chamber to pressurize the pressurized medium. In addition, the master cylinder 1400 may further include a pedal simulator which is provided in the master chamber and provides a pedal feel to the driver.

The electronic control unit 1500 may be mounted on the rear surface 1160 of the hydraulic block 1100 and electronically control the plurality of valves and connectors provided on the rear surface 1160 of the hydraulic block 1100.

In this case, a connector 1510 of the electronic control unit 1500 may be mounted to face the upper surface 1150 of the hydraulic block 1100.

The hydraulic assembly 1000 for an electronic brake system according to the first embodiment of the present invention has an effect of improving the packaging and assembability of the hydraulic assembly 1000 by the above-described layout.

Hereinafter, a hydraulic assembly 2000 for an electronic brake system according to a second embodiment of the present invention will be described.

In this case, the same content as the hydraulic assembly 1000 for an electronic brake system according to the first embodiment of the present invention will be omitted to avoid redundancy.

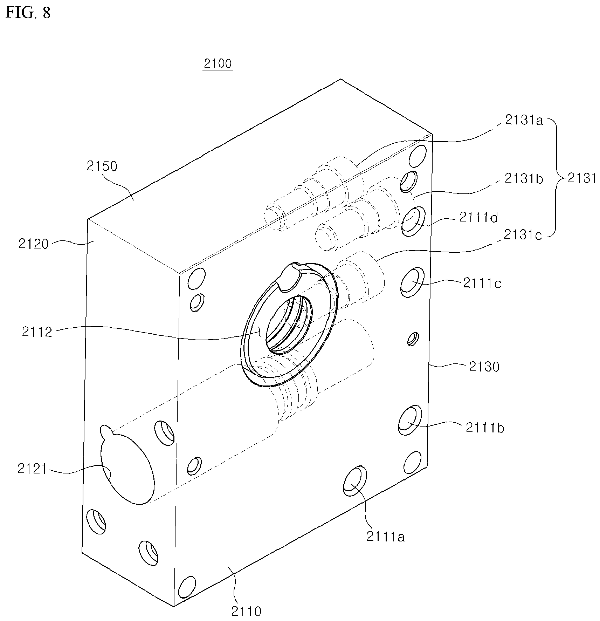

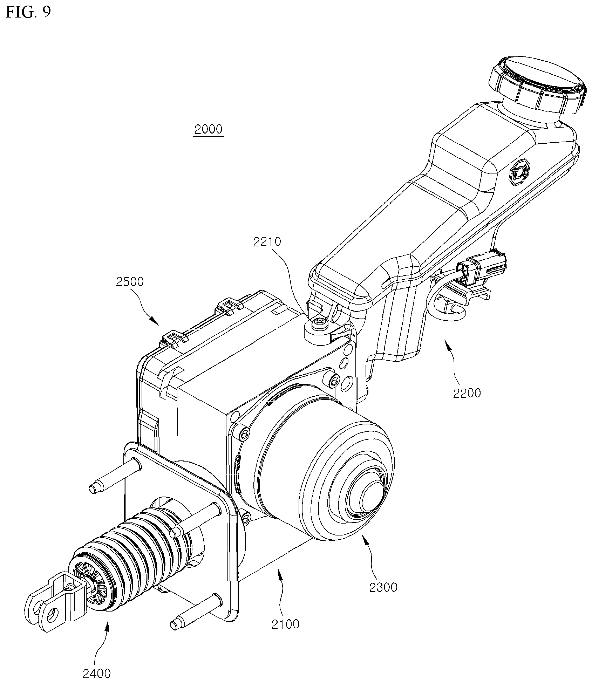

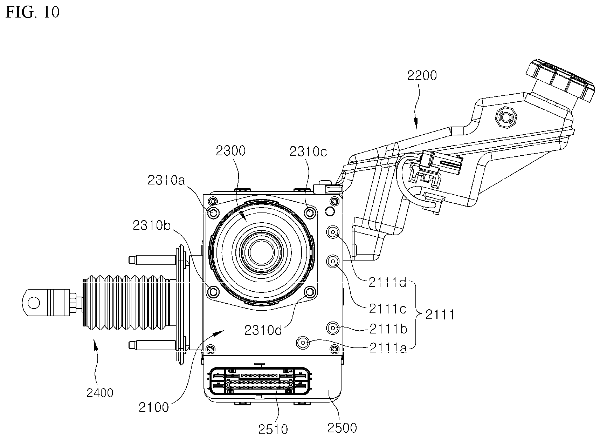

FIG. 8 is a schematic perspective view illustrating a hydraulic block for an electronic brake system according to a second embodiment of the present invention, FIG. 9 is a perspective view illustrating a hydraulic assembly for an electronic brake system according to the second embodiment of the present invention, and FIG. 10 is a front view illustrating the hydraulic assembly for an electronic brake system according to the second embodiment of the present invention.

Referring to FIGS. 8 to 10, a hydraulic block 2100 for an electronic brake system according to the second embodiment of the present invention includes a plurality of bores and connection ports and is provided as a cubic block in which flow paths connecting the plurality of bores and connection ports are formed.

A pump which provides the pressure of a pressurized medium is installed in a pump accommodation bore 2112.

The pump accommodation bore 2112 may be disposed in a front surface 2110 of the hydraulic block 2100 to be biased toward one side and, for example, may be disposed in a left upper corner of the front surface 2110 of the hydraulic block 2100 to be closer to a first side surface 2120 and an upper surface 2150.

Wheel cylinder connection ports 2111 may be provided as a plurality of holes for communicating with wheel cylinders, disposed in the front surface 2110 of the hydraulic block 2100 to be spaced apart from each other, and provided as two pairs.

At least some of the plurality of wheel cylinder connection ports 2111 may be horizontally arranged under the pump accommodation bore 2112, and the remainder may be vertically arranged beside the pump accommodation bore 2112. For example, when the pump accommodation bore 2112 is provided in the left upper corner of the front surface 2110 of the hydraulic block 2100, one pair of the plurality of wheel cylinder connection ports 2111 may be vertically arranged to the right of the pump accommodation bore 2112, and the other pair of the plurality of wheel cylinder connection ports 2111 may be horizontally disposed under the pump accommodation bore 2112.

At least some of the plurality of wheel cylinder connection ports 2111 may be horizontally disposed under a master cylinder accommodation bore 2121 in the front surface 2110 of the hydraulic block 2100, and the remainder may be vertically disposed beside the pump accommodation bore 2112.

The master cylinder accommodation bore 2121 for accommodating a master cylinder is formed in the first side surface 1120 of the hydraulic block 2100.

A master cylinder 2400 for transferring a pressurized medium according to a braking intention of a driver is installed in the master cylinder accommodation bore 2121.

The master cylinder accommodation bore 2121 may be arranged in a direction from the first side surface 2120 toward a second side surface 2130 and disposed perpendicular to the pump accommodation bore 2112.

The master cylinder accommodation bore 2121 may be disposed in the first side surface 2120 of the hydraulic block 2100 to be biased toward one side and not overlap the pump accommodation bore 2112. For example, when the pump accommodation bore 2112 is disposed at an upper side of the front surface 2110, the master cylinder accommodation bore 2121 may be disposed at a lower side of the first side surface 2120 to be closer to a lower surface 2140. In this case, as described above, the master cylinder accommodation bore 2121 may be disposed at a certain distance from the lower surface 2140 of the hydraulic block 2100 so that at least one wheel cylinder connection port 2111 is provided above the master cylinder accommodation bore 2121.

Reservoir connection ports communicating with a reservoir 2200 for storing the pressurized medium are provided in the second side surface 2130 of the hydraulic block 2100. In this case, the reservoir connection ports may be disposed at an upper side of the second side surface 2130.

Reservoir connection ports 2131 may be provided as a plurality of holes for communication with the reservoir 2200 and, for example, may include first and second reservoir connection ports 2131a and 2131b connected to the master cylinder 2400 through separate flow paths and a third reservoir connection port 2131c connected to a pump through a separate flow path.

One or more reservoir fastening grooves to which fixing bolts for mounting the reservoir 2200 are fastened may be provided in the second side surface 2130 of the hydraulic block 2100. In this case, the reservoir fastening grooves may also be provided in the upper surface 2150 of the hydraulic block 2100, thereby firmly mounting the reservoir.

Although not illustrated in the drawings, accommodation bores in which a plurality of valves, such as an NO valve, an NC valve, etc., are provided may be provided in a rear surface 2160 of the hydraulic block 2100.

The hydraulic assembly 2000 for an electronic brake system according to the second embodiment of the present invention includes the cubic hydraulic block 2100, a motor 2300, the reservoir 2200, the master cylinder 2400, and an electronic control unit 2500 which are mounted on the hydraulic block 2100.

The motor 2300 may be mounted in the front surface 2110 of the hydraulic block 2100 at a position corresponding to the pump accommodation bore 1112 and, for example, may be disposed in the front surface 2110 of the hydraulic block 2100 to be biased upward. In this case, the motor 2300 may pass through the front surface 2110 of the hydraulic block 2100 and be coupled thereto by a plurality of fixing bolts.

The reservoir 2200 may be mounted on the second side surface 2130 of the hydraulic block 2100 at a position corresponding to the reservoir connection port and, for example, may be disposed on the second side surface 2130 of the hydraulic block 2100 to be biased upward.

The master cylinder 2400 may be mounted on the first side surface 2120 of the hydraulic block 2100 at a position corresponding to the master cylinder accommodation bore 2121 and, for example, may be disposed on the first side surface 1120 of the hydraulic block 2100 to be biased upward.

The electronic control unit 2500 may be mounted on the rear surface 2160 of the hydraulic block 2100 and electronically control the plurality of valves and connectors provided on the rear surface 2160 of the hydraulic block 2100.

In this case, a connector 2510 of the electronic control unit 2500 may be mounted to face the lower surface 2140 of the hydraulic block 1100.

Although the present invention has been described above with reference to limited specific embodiments and drawings, the present invention is not limited thereto, and various modifications and changes may be made by those skilled in the art in the technical spirit of the present invention and equivalents of the scope which will be defined in the claims below.

Although the present invention has been described above with reference to limited specific embodiments and drawings, the present invention is not limited thereto, and various modifications and changes may be made by those skilled in the art in the technical spirit of the present invention and equivalents of the scope which will be defined in the claims below.

## Claims

1. A hydraulic block for an electronic brake system, which includes a plurality of valves and flow paths for adjusting braking hydraulic pressure supplied to a plurality of wheel cylinders, the hydraulic block comprising:
a pump accommodation bore which is provided in a front surface of the hydraulic block and accommodates a pump which supplies hydraulic pressure;
a master cylinder accommodation bore which is provided in a first side surface of the hydraulic block and accommodates a master cylinder therein;
a plurality of wheel cylinder connection ports which are provided in the front surface of the hydraulic block and communicate with the plurality of wheel cylinders; and
a reservoir connection port which is provided in a second side surface of the hydraulic block and communicates with a reservoir which stores a pressurized medium,
wherein, among the plurality of wheel cylinder connection ports,
one or more of the wheel cylinder connection ports are vertically arranged at a left or right side of the pump accommodation bore, and
the remaining wheel cylinder connection ports are arranged in a left-right direction on or under the pump accommodation bore.

2. The hydraulic block of claim 1, further comprising a plurality of reservoir fastening grooves provided in the second side surface and an upper surface of the hydraulic block in order for mounting the reservoir.

3. The hydraulic block of claim 1, wherein the reservoir connection port is disposed at an upper side of the second side surface of the hydraulic block.

4. The hydraulic block of claim 1, wherein:
the pump accommodation bore is provided at a lower side of the front surface of the hydraulic block; and
the master cylinder accommodation bore is provided at an upper side of the first side surface of the hydraulic block.

5. The hydraulic block of claim 4, wherein, among the plurality of wheel cylinder connection ports:
one or more wheel cylinder connection ports are disposed in the left-right direction above the master cylinder accommodation bore; and
the remaining wheel cylinder connection ports are vertically arranged at the left or right side of the pump accommodation bore.

6. The hydraulic block of claim 4, wherein:
the reservoir connection port is provided as a plurality of reservoir connection ports;
some of the plurality of reservoir connection ports are disposed above the master cylinder accommodation bore; and
the remainder are disposed under the master cylinder accommodation bore.

7. The hydraulic block of claim 1, wherein:
the pump accommodation bore is provided at an upper side of the front surface of the hydraulic block; and
the master cylinder accommodation bore is provided at a lower side of the first side surface of the hydraulic block.

8. The hydraulic block of claim 1, wherein, among the plurality of wheel cylinder connection ports:
one or more wheel cylinder connection ports are arranged in the left-right direction under the master cylinder accommodation bore; and
the remaining wheel cylinder connection ports are vertically arranged at the left or right side of the pump accommodation bore.

9. A hydraulic block for an electronic brake system, which includes a plurality of valves and flow paths for adjusting braking hydraulic pressure supplied to a plurality of wheel cylinders, the hydraulic block comprising:
a pump accommodation bore which is provided in a front surface of the hydraulic block and accommodates a pump which supplies hydraulic pressure;
a motor which is mounted on the front surface of the hydraulic block and includes a driving unit, which provides power to the pump, and a cover part which covers the driving unit; and
a ventilation unit including a ventilation path which is formed to pass through the hydraulic block and is provided separately from the pump accommodation bore and of which one side communicates with an inner portion of the cover part and the other side communicates with a side surface of the hydraulic block.

10. The hydraulic block of claim 9, wherein the ventilation unit includes:
an outer ventilation hole formed to expand at an end portion of the ventilation path; and
a filter inserted into the outer ventilation hole.

11. The hydraulic block of claim 10, wherein the ventilation unit further includes a stopper, which is press-fitted into the outer ventilation hole to fix the filter to the outer ventilation hole and includes at least one hole which communicates with the filter.

12. The hydraulic block of claim 9, wherein the ventilation path includes:
a first ventilation path which is provided in one surface of the hydraulic block and of which one side communicates with an inner portion of the motor; and
a second ventilation path which is formed perpendicular to the first ventilation path and of which one side communicates with the first ventilation path and the other side communicates with a side surface of the hydraulic block.

13. A hydraulic assembly for an electronic brake system, comprising:
a hydraulic block in which a plurality of valves, a flow path, and a pump are installed to control braking hydraulic pressure to be supplied to a plurality of wheel cylinders;
a motor which is mounted on a front surface of the hydraulic block and provides power to the pump;
a master cylinder which is mounted on a first side surface of the hydraulic block and generates hydraulic pressure;
a reservoir which is mounted on a second side surface and an upper surface of the hydraulic block and stores a pressurized medium; and
an electronic control unit which is mounted on a rear surface of the hydraulic block and controls the plurality of valves and the motor and in which a connector is formed.

14. The hydraulic assembly of claim 13, wherein:
the master cylinder is disposed at an upper side of the first side surface of the hydraulic block; and
the motor is disposed at a lower side of the front surface of the hydraulic block.

15. The hydraulic assembly of claim 14, wherein the electronic control unit is mounted so that the connector faces upward.

16. The hydraulic assembly of claim 13, wherein:
the master cylinder is disposed at an upper side of the first side surface of the hydraulic block; and
the motor is disposed at a lower side of the front surface of the hydraulic block.

17. The hydraulic assembly of claim 16, wherein the electronic control unit is mounted so that the connector faces downward.
